# EUROPEAN PATENT APPLICATION

(11) **EP 2 292 373 A2**
(43) Date of publication of application: **09.03.2011**
(21) Application number: 10008889.7
(22) Date of filing: 26.08.2010
(51) Int. Cl.: B23P 15/00, F02F 7/00

(54) **Crankcase and main bearing cap construction**

(30) Priority: 02.09.2009 US 552555
(71) Applicant: International Engine Intellectual Property Company, LLC, Warrenville IL 60555 (US)
(72) Inventor: Zielke, Martin R., Lockport, IL 60441 (US); Witkowski, Amdrew B., Oakbrook Terrace, IL 60181 (US); Kenitz, Roger C., Naperville, IL 60564 (US)
(74) Representative: Kuhnen & Wacker

(57) **Abstract**

A method for manufacturing an engine includes the steps of: casting a side skirt having first and second opposing sidewalls and casting a transverse wall of the cast material connecting the sidewalls. The transverse wall will form a bulkhead and a main bearing cap. A first void and a second void are cast into the transverse wall on opposite lateral sides of a main bearing journal location, each void adjacent to one of the sidewalls. A main bearing journal hole is then machined into the transverse wall. Cast material is removed along a first removal path from the edge of the transverse wall and ending into the first void, and along a second removal path from the edge of the transverse wall and ending into the second void. A tool exerts an opening force within the circular bore to fracture the cast material along the first and second fracture planes to separate the main bearing cap from the bulkhead. Before fracturing the cast material along the first and second fracture planes, main bearing bolt holes and cross bolt holes can be machined into the bulkhead and the bearing cap. A spacer piece can be fit into the removal paths when reassembling the bearing cap to the bulkhead.

## Description

### FIELD OF THE INVENTION

This invention relates to internal combustion engines, including but not limited to crankcase and main bearing cap construction for an internal combustion engine.

### BACKGROUND OF THE INVENTION

A typical internal combustion engine includes a crankcase having a plurality of cylinders. The cylinders contain pistons whose reciprocating motion due to combustion events that occur in a variable volume within a plurality of cylinders in the crankcase is transferred through a crankshaft to yield a torque output of the engine. Often, engine crankcases are made of cast metal, and include passages integrally formed therein for the transfer of various fluids from one location of the engine to another.

An engine crankcase has to have high strength and stiffness to handle the cylinder loads and to adequately journal the crankshaft for rotation.

To provide this stiffness it is known to provide a separately cast and machined bedplate that is assembled to the crankcase below the main bearing caps and finish machined.

Alternately, a deep skirt incorporating cross bolted main bearing caps, the main bearing caps being transversely bolted to the skirt, provides crankcase rigidity. The bearing caps for a traditional deep skirt design are manufactured separately and then assembled to the crankcase and finish machined.

U.S. Patents Nos. 6,145,574; 5,911,349 and 5,716,145 disclose methods of manufacturing bearing caps wherein the bearing caps are cast with the crankcase and after machining of the journal-bearing opening for the crankshaft main bearings, are cracked or separated from the crankcase.

The present inventors have recognized that a need exists for a rigid crankcase design that also utilizes a cast-in-place and cracked-off bearing cap design.

### SUMMARY OF THE INVENTION

The exemplary method of the present invention produces cast and cracked main bearing caps in a rigid crankcase structure utilizing a deep skirt design with cross bolted main bearing caps. The method eliminates the need for separately cast caps or bedplates for a rigid crankcase design. Cast windows between a crankcase skirt and the cap and a saw-cut or drill separation break the connection between the skirt and the cap to allow the caps to be cracked off.

An exemplary method is provided for manufacturing an engine that includes the steps of:
casting a side skirt having first and second opposing sidewalls of cast material;
casting a transverse wall of the cast material connecting the sidewalls and having an edge;
predetermining a main bearing journal location in the transverse wall;
casting a first void and a second void into the transverse wall on opposite lateral sides of the main bearing journal location, each void adjacent to one of the sidewalls;
predetermining a first fracture plane from the main bearing journal location to the first void and a second fracture plane from the main bearing journal location to the second void;
machining a circular bore though the transverse wall at the main bearing journal location and intersecting the first and second fracture planes, the circular bore being sized to be a main bearing journal;
removing cast material along a first removal path from the edge of the transverse wall and ending into the first void;
removing cast material along a second removal path from the edge of the transverse wall and ending into the second void; and
exerting an opening force within the circular bore to fracture the cast material along the first and second fracture planes; and
separating a main bearing cap from remaining portions of the transverse wall, the main bearing cap being defined between the circular bore, the first and second fracture planes, the first and second removal paths, the edge, and the first and second voids.

Before fracturing the cast material along the first and second fracture planes, first and second threaded cross bolt holes can be machined into the main bearing cap for receiving a threaded fasteners from the first and second sidewalls. At least one main bearing threaded bolt hole can be machined in the transverse wall on each lateral side of the bore, each main bearing threaded bolt hole extending from one of the first and second fracture planes in a direction away from the main bearing cap.

The cast material along both the first and second removal paths can be removed by drilling into the transverse wall along the first and second removal paths with a drill bit having a diameter at least as wide as a wall thickness of the transverse wall along each respective first and second removal paths. The transverse wall can have a reduced thickness along the first and second removal paths. Particularly, the thickness can be reduced by opposing grooves that are on opposite faces of the transverse wall and which follow the respective removal path.

Alternately, the cast material along the first and second removal paths can be removed by saw cutting.

When the engine is assembled after the main bearing caps are separated, filler or shim pieces can be installed into the removal paths to ensure that a solid material bridge is provided between the bearing caps and the sidewalls, to prevent any distortion, over stress or deflection when the cross bolts are tightened.

An exemplary engine block is provided that includes:
a cylinder block having a plurality of cylinders;
a skirt having first and second opposing sidewalls cast with the cylinder block;
a plurality of spaced apart transverse wall portions or bulkheads, each wall portion connected to both of the first and second sidewalls;
each the transverse wall portion having a semi-circular upper main bearing saddle and a main bearing threaded bolt hole on each side of the upper main bearing saddle;
a main bearing cap being fastened beneath the transverse wall portion and having a semi-circular lower main bearing saddle arranged underlying the upper main bearing saddle the main bearing cap having a first side edge spaced from the first sidewall and a second side edge spaced from the second sidewall;
a first filler piece arranged tightly between the first edge and the first sidewall and a second filler piece arranged tightly between the second edge and the second sidewall;
a first cross bolt penetrating the first sidewall and threaded into a first threaded hole in the main bearing cap and a second cross bolt penetrating the second sidewall and threaded into a second threaded hole in the main bearing cap; and
a fastener arranged on each side of the lower main bearing saddle penetrating the main bearing cap and threaded into a respective main bearing threaded bolt hole.

The first and second filler or shim pieces can include first and second transverse holes and the first and second cross bolts pass through the first and second transverse holes.

The first edge of the main bearing cap can be spaced from the first sidewall by a first gap that is partially cylindrical and the first filler piece has a corresponding cylindrical shape. The second edge of the main bearing cap can be spaced from the second sidewall by a second gap that is partially cylindrical and the second filler piece has a corresponding cylindrical shape.

In addition to the rigid design of the crankcase, the stresses in the bulkhead associated with the assembly of the traditional deep skirt cross bolted designs are reduced due to the shaping of the cored window.

A cost effective manufacturing method is provided for a cross bolted main bearing cap design. By integrating main bearing caps with the main crankcase casting and machining them together with the rest of the crankcase, casting and machining separate parts and then bringing them together for final machining is avoided.

Numerous other advantages and features of the present invention will be become readily apparent from the following detailed description of the invention and the embodiments thereof, from the claims and from the accompanying drawings.

### BRIEF DESCRIPTION OF THE DRAWINGS

Figure 1 is a perspective view of a diesel engine incorporating the structure of the present invention;

Figure 2 is a schematical side view of a portion of the engine shown in Figure 1;

Figure 3 is an enlarged, fragmentary sectional view taken generally along line 3-3 from Figure 2;

Figure 4 is a view similar to Figure 3 but at an earlier stage of manufacture after casting and before machining;

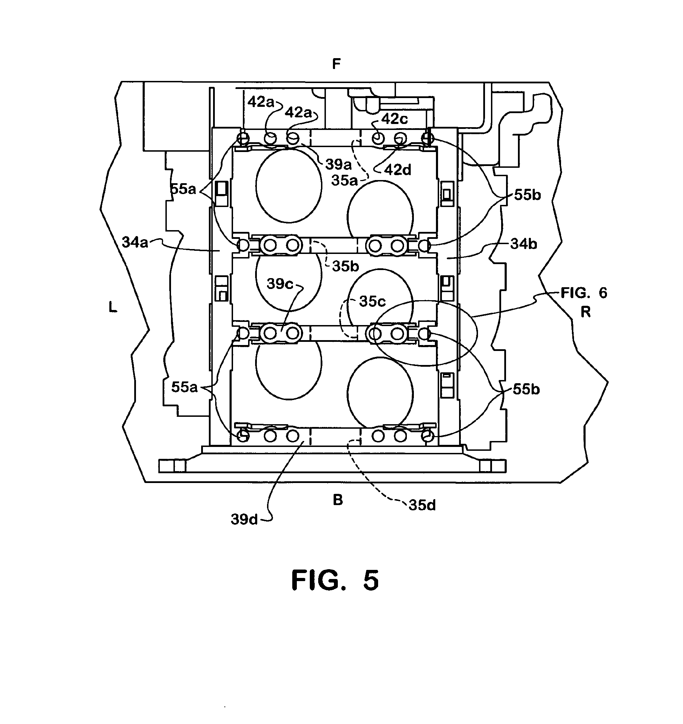

Figure 5 is a bottom view of the engine shown in Figure 3 but with some parts removed for clarity; and

Figure 6 is an enlarged portion taken from Figure 5.

### DESCRIPTION OF THE PREFERRED EMBODIMENTS

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

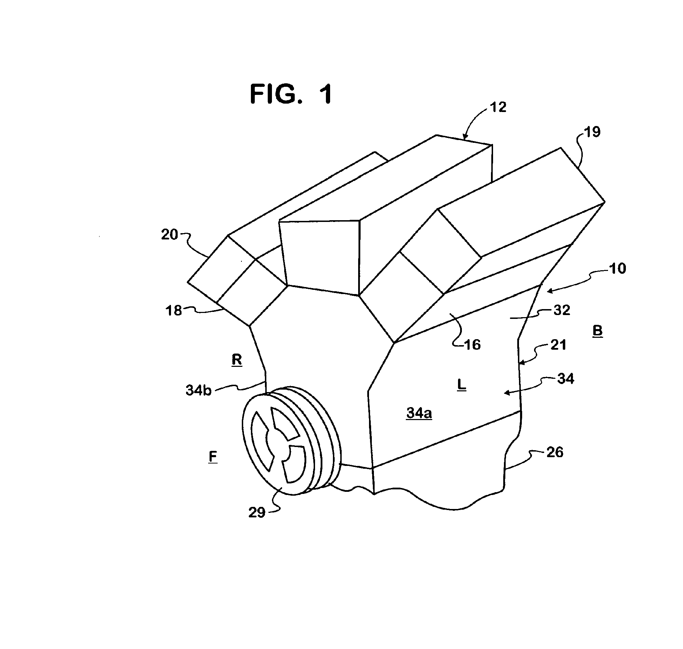

Figure 1 illustrates an engine 10 that incorporates an exemplary embodiment of the present invention. The engine illustrated is a V6 diesel engine, such as a MAXXFORCE 5 diesel engine available from Navistar, Inc. of Warrenville, Illinois, US. Although a V6 diesel engine is illustrated herein, the present invention is also applicable to other engine configurations such as V8 and inline cylinder engines.

The engine includes an intake manifold 12, valve heads 16, 18, valve covers 19, 20, an engine block or crankcase 21, and an oil pan 26. The engine block 21 includes a cylinder block 32, and a skirt 34 having left and right side walls 34a, 34b. The front of the engine 10 is indicated by "F" and is noted by the presence of a crankshaft pulley 29. The left side of the engine is indicated by "L" and the right side by "R." The back side of the engine is indicated by "B." The referenced directions are meaningful only for ease of description herein and the invention encompasses any particular orientation of the engine in a vehicle.

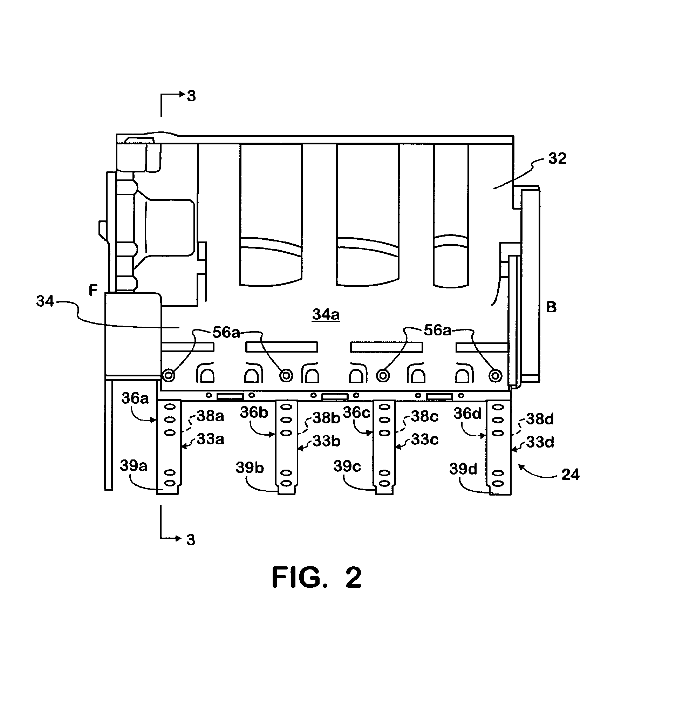

Figure 2 illustrates the cylinder block and skirt separated from the oil pan and remaining components of the engine of Figure 1. The cylinder block and the skirt are shown with crankshaft, rods, heads and other engine components removed. Transverse walls 33a, 33b, 33c, 33d are cast with the sidewalls 34a, 34b. As described below, the transverse walls are machined to form main bearing bulkheads 36a, 36b, 36c, 36d and main bearing caps 39a, 39b, 39c, 39d. The bulkheads 36a, 36b, 36c, 36d are enclosed by the skirt 34 and the oil pan 26. Each bulkhead includes on its lower end an upper main bearing saddle 38a, 38b, 38c, 38d.

A main bearing cap 39a, 39b, 39c, 39d is bolted to each of the bulkheads 36a, 36b, 36c, 36d, having a lower main bearing saddle 40a, 40b, 40c, 40d underlying the upper main bearing saddles 38a, 38b, 38c, 38d. A circular bearing journal 35a, 35b, 35c, 35d for a crankshaft is defined between each saddle pair 40a,38a; 40b, 38b; 40c, 38c; 40d, 38d.

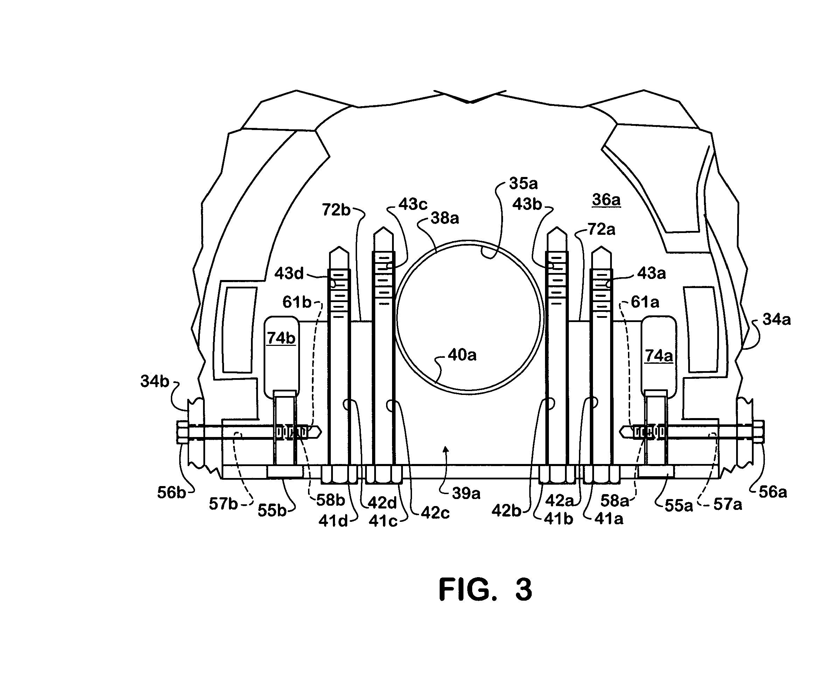

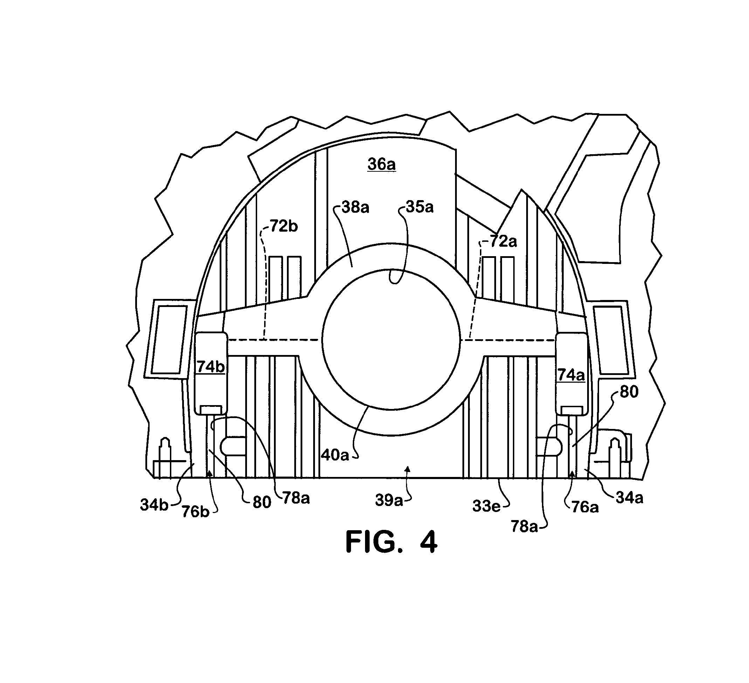

Figures 3 and 4 illustrate one bulkhead 36a and one main bearing cap 39a with the understanding that the remaining three bulkheads 36b, 36c, 36d and the remaining bearing caps 39b, 39c, 39d are identically configured.

Dowels or pins 55a, 55b are fit on opposite sides of the bearing caps into gaps located between the bearing cap and the sidewalls 34a, 34b.

Each main bearing cap 39a, 39b, 39c, 39d is bolted to the left and right sidewalls 34a, 34b of the skirt 34 by a pair of cross bolts 56a, 56b to rigidify the engine block 21. The cross bolts 56a, 56b are inserted though sidewall plain holes 57a, 57b in the sidewalls 34a, 34b, pass though dowel plain holes 58a, 58b in the dowels 55a, 55b and are threaded into cap threaded holes 61a, 61b in the main bearing caps 39a, 39b, 39c, 39d.

The main bearing caps 39a, 39b, 39c, 39d are bolted to the bulkheads 36a, 36b, 36c, 36d using four main bearing bolts 41a, 41b, 41c, 41d inserted though plain holes 42a, 42b, 42c, 42d and threaded into main bearing threaded holes 43a, 43b, 43c, 43d machined into the bulkheads 36a, 36b, 36c, 36d.

During manufacture, the main bearing caps 39a, 39b, 39c, 39d are cast together in unitary fashion with the bulkheads 36a, 36b, 36c, 36d including the main bearing saddles 38a, 38b, 38c, 38d, the skirt 34 and remaining portions of the engine block 21. After the bearing journals 35a, 35b, 35c, 35d, the main bearing bolt holes 42a, 42b, 42c, 42d , 43a, 43b, 43c, 43d, the plain holes 57a, 57b in the sidewalls 34a, 34b, and the threaded holes 61a, 61b in the main bearing caps 39a, 39b, 39c, 39d are machined, steps are taken to crack the main bearing caps from the saddles along one or more fracture split planes 72a, 72b. Although the planes 72a, 72b illustrated are coplanar, the invention also encompasses planes 72a, 72b that are at an angle.

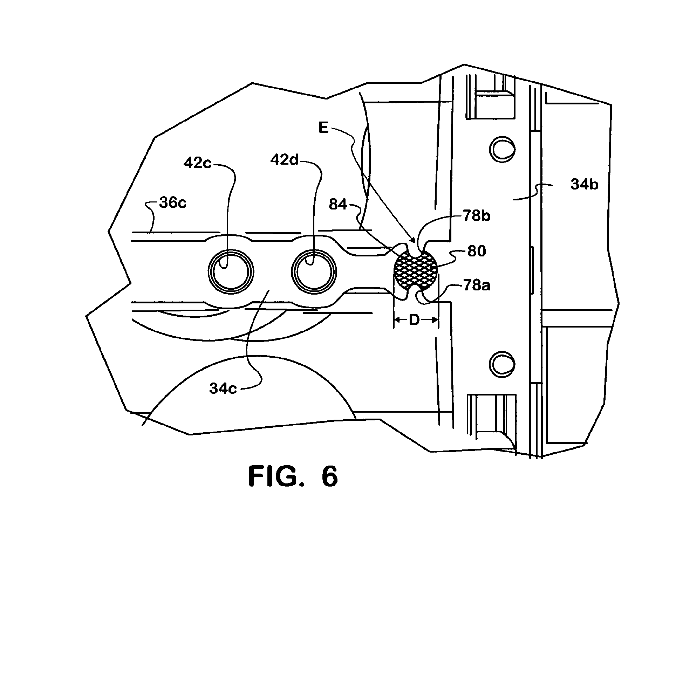

To accomplish the separation along the fracture split planes 72a, 72b, the casting includes left and right cored windows or voids 74a, 74b that intersect the respective fracture split plane and extend through each transverse wall in a longitudinal direction (front to back). The bearing caps 39a, 39b, 39c, 39d are cast with the adjacent side skirt sidewalls 34a, 34b via respective lefr and right bridge pieces 76a, 76b that can be separated from the adjacent skirt sidewall 34a, 34b by being saw cut, or can have opposing vertical slots or grooves 78a, 78b partially penetrating the bridge piece 76a, 76b, along a cast material removal path (Figures 4 and 6) that extends from an edge 33e of the transverse wall vertically to the respective void 74a, 74b. A remaining web 80 of cast material between the grooves 78a, 78b can be removed by a drilling process. A drill bit having diameter "D" that is at least as as wide as the web 80 creates a drill bore 84 (shown hatched in Figure 6) and removes the web 80 in a vertical direction from a bottom of the web to the voids 74a, 74b, the bore being open into the voids 74a, 74b.

Once this web is removed, the bearing caps can be cracked and separated from the bulkheads, with each bearing cap necessarily re-matched to its respective bulkhead for re-assembly. Detailed descriptions of methods of cracking bearing caps from bearing saddles along a fracture split plane is described for example in U.S. patent Nos. 6,145,574; 5,911,349 and 5,716,145, herein incorporated by reference.

For reassembly, bearing shells are installed within the saddles of the bearing caps and the bulkheads, the crankshaft is installed within the journals 35a, 35b, 35c, 35d and the bearing caps are bolted to the correct bulkheads using the bolts 41a, 41b, 41c, 41d. The dowels 55a, 55b are tightly fit into the bores 84 on each side of each bearing cap 39a, 39b, 39c, 39d and the cross bolts are inserted through the plain holes 57a, 57b in the sidewalls 34a, 34b, through the holes 58a, 58b in the dowels and threaded tightly into the threaded holes 61a, 61b in the bearing caps. The dowels 55a, 55b act as filler or spacer or shim pieces that refill the gap left by the removed cast material removed along the removal paths and provide a solid material bridge between the bearing cap and the sidewalls 34a, 34b, such that tightening the bolts 56a, 56b does not introduce a lateral distortion or excessive stress on the sidewall-to-bearing cap connection. Furthermore, the shaping and presence of the voids 74a, 74b reduces stress on the sidewalls and bulkheads during cross bolting.

From the foregoing, it will be observed that numerous variations and modifications may be effected without departing from the spirit and scope of the invention. It is to be understood that no limitation with respect to the specific apparatus illustrated herein is intended or should be inferred.

## Claims

1. A method of manufacturing an engine, comprising the steps of:
casting a side skirt having first and second opposing sidewalls of cast material;
casting a transverse wall of the cast material connecting the sidewalls and having an edge;
predetermining a main bearing journal location in the transverse wall;
casting a first void and a second void into the transverse wall on opposite lateral sides of the main bearing journal location, each void adjacent to one of the sidewalls;
predetermining a first fracture plane from the main bearing journal location to the first void and a second fracture plane from the main bearing journal location to the second void;
machining a circular bore though the transverse wall at the main bearing journal location and intersecting the first and second fracture planes, the circular bore being sized to be a main bearing journal;
removing cast material along a first removal path from the edge of the transverse wall and ending into the first void;
removing cast material along a second removal path from the edge of the transverse wall and ending into the second void;
exerting an opening force within the circular bore to fracture the cast material along the first and second fracture planes; and
separating a main bearing cap from remaining portions of the transverse wall, the main bearing cap being defined between the circular bore, the first and second fracture planes, the first and second removal paths, the edge, and the first and second voids.

2. The method according to claim 1, comprising the further steps of: before fracturing the cast material along the first and second fracture planes, machining a first threaded cross bolt hole into the main bearing cap for receiving a threaded fastener from the first sidewall and a second threaded cross bolt hole into the bearing cap for receiving a threaded fastener from the second sidewall.

3. The method according to claim 1, comprising the further steps of: before fracturing the cast material along the first and second fracture planes, machining at least one main bearing threaded bolt hole in the transverse wall on each lateral side of the bore, each main bearing threaded bolt hole extending from one of the first and second fracture planes in a direction away from the main bearing cap.

4. The method according to claim 1, wherein the steps of removing cast material along a first removal path from the edge of the transverse wall and ending into the first void; and removing cast material along a second removal path from the edge of the transverse wall and ending into the second void are further defined in that the cast material along both the first and second removal paths is removed by drilling into the transverse wall along the first and second removal paths with a drill bit having a diameter at least as wide as a wall thickness of the transverse wall along each respective first and second removal paths.

5. The method according to claim 4, wherein the step of casting a transverse wall of the cast material connecting the sidewalls and having an edge is further defined in that the transverse wall has a reduced thickness along the first and second removal paths.

6. The method according to claim 1, wherein the steps of removing cast material along a first removal path from the edge of the transverse wall and ending into the first void; and removing cast material along a second removal path from the edge of the transverse wall and ending into the second void are further defined in that the steps are accomplished by saw cutting.

7. The method according to claim 1, comprising the further step of providing a first filler piece for installation into the first removal path and a second filler piece for installation in the second removal path, and after the steps of removing cast material along a first removal path and removing cast material along a second removal path and after separating the main bearing cap, when reinstalling the bearing cap, fitting the first and second filler pieces into the first and second removal paths to replace the casting material removed.

8. The method according to claim 7, wherein the steps of removing cast material along a first removal path from the edge of the transverse wall and ending into the first void; and removing cast material along a second removal path from the edge of the transverse wall and ending into the second void are further defined in that the cast material along both the first and second removal paths is removed by drilling into the transverse wall along the first and second removal paths with a drill bit having a diameter at least as wide as a wall thickness of the transverse wall along each respective first and second removal paths, and wherein the filler pieces comprise cylindrical dowels sized to fit within the bore drilled by the drill bits.

9. The method according to claim 8, comprising the further steps of: before fracturing the cast material along the first and second fracture planes, machining a first threaded cross bolt hole into one edge the main bearing cap for receiving a first threaded fastener from the first sidewall and a second threaded cross bolt hole into an opposite edge of the bearing cap for receiving a second threaded fastener from the second sidewall, and providing a hole through each dowel for passing therethrough the first and second threaded fasteners from the first and second sidewalls to the first and second threaded cross bolt holes.

10. The method according to claim 9, comprising the further steps of: before fracturing the cast material along the first and second fracture planes, machining at least one main bearing threaded bolt hole in the transverse wall on each lateral side of the bore, each main bearing threaded bolt hole extending from one of the first and second fracture planes in a direction away from the main bearing cap.

11. An engine block, comprising:
a cylinder block having a plurality of cylinders;
a skirt having first and second opposing sidewalls cast with the cylinder block;
a plurality of spaced apart transverse wall portions, each wall portion connected to both of the first and second sidewalls;
each the transverse wall portion having a semi-circular upper main bearing saddle and a main bearing threaded bolt hole on each side of the upper main bearing saddle;
a main bearing cap being fastened beneath the transverse wall portion and having a semi-circular lower main bearing saddle arranged underlying the upper main bearing saddle the main bearing cap having a first side edge spaced from the first sidewall and a second side edge spaced from the second sidewall;
a first filler piece arranged tightly between the first edge and the first sidewall and a second filler piece arranged tightly between the second edge and the second sidewall;
a first cross bolt penetrating the first sidewall and threaded into a first threaded hole in the main bearing cap and a second cross bolt penetrating the second sidewall and threaded into a second threaded hole in the main bearing cap; and
a fastener arranged on each side of the lower main bearing saddle penetrating the main bearing cap and threaded into a respective main bearing threaded bolt hole.

12. The engine block according to claim 11, wherein the first and second filler pieces include first and second transverse holes and the first and second cross bolts pass through the first and second transverse holes.

13. The engine block according to claim 12, wherein the first edge of the main bearing cap is spaced from the first sidewall by a first gap that is partially cylindrical and the first filler piece is cylindrical; and wherein the second edge of the main bearing cap is spaced from the second sidewall by a second gap that is partially cylindrical and the second filler piece is cylindrical.

14. The engine block according to claim 11, wherein the first edge of the main bearing cap is spaced from the first sidewall by a first gap that is partially cylindrical and the first filler piece is cylindrical; and wherein the second edge of the main bearing cap is spaced from the second sidewall by a second gap that is partially cylindrical and the second filler piece is cylindrical.
